# FASCICULE DE BREVET EUROPEEN

(11) **EP 3 938 949 B1**
(45) Date de publication et mention de la délivrance du brevet: **17.01.2024**
(21) Numéro de dépôt: 20710254.2
(22) Date de dépôt: 19.02.2020
(51) Int. Cl.: G06V 20/58

(54) **ENTRAINEMENT D'UN RESEAU DE NEURONES, POUR L'ASSISTANCE A LA CONDUITE D'UN VEHICULE PAR DETERMINATION DE DELIMITATIONS DE VOIE DIFFICILEMENT OBSERVABLES**
AUSBILDUNG EINES NEURONALES NETZWERKS ZUR UNTERSTÜTZUNG DES FAHRZEUGS DURCH BESTIMMUNG VON SCHWIERIG BEOBACHTBAREN SPURBEGRENZUNGEN
TRAINING OF A NEURONAL NETWORK, FOR ASSISTANCE IN DRIVING A VEHICLE BY DETERMINING LANE BOUNDARIES WHICH ARE DIFFICULT TO OBSERVE

(30) Priorité: 13.03.2019 FR 1902562
(43) Date de publication de la demande: 19.01.2022
(73) Titulaire: Stellantis Auto SAS, 78300 Poissy (FR)
(72) Inventeur: LARGE, Frederic, 78180 MONTIGNY LE BRETONNEUX (FR); BOUTARD, Patrick, 75016 PARIS 16 (FR)
(86) Numéro de dépôt international: PCT/FR2020/050313
(87) Numéro de publication internationale: WO 2020/183081

(56) Documents cités:
- WO-A1-2016/012524
- US-A1- 2017 369 057
- US-B1- 9 286 524

## Description

### Domaine technique de l'invention

L'invention concerne les véhicules terrestres à conduite au moins partiellement automatisée (ou autonome) et éventuellement de type automobile, et plus précisément l'entraînement d'un réseau de neurones destiné à détecter des délimitations d'une voie de circulation sur laquelle circule de tels véhicules.

### Etat de la technique

Dans ce qui suit on considère qu'un véhicule terrestre est à conduite au moins partiellement automatisée (ou autonome) lorsqu'il peut être conduit sur une route de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle. Par exemple, la conduite automatisée (ou autonome) d'un véhicule (à conduite au moins partiellement automatisée) peut consister à diriger partiellement ou totalement ce véhicule ou à apporter tout type d'aide à une personne physique conduisant ce véhicule. Cela couvre donc toute conduite automatisée (ou autonome), du niveau 1 au niveau 5 dans le barème de l'OICA (Organisation International des Constructeurs Automobiles).

Par ailleurs, on entend ici par « véhicule terrestre » tout type de véhicule pouvant circuler sur une route, et notamment un véhicule automobile, un véhicule utilitaire, un cyclomoteur, une motocyclette, un minibus, un car, un robot de stockage dans un entrepôt, ou un engin de voirie.

Il existe de nombreux procédés d'assistance à la conduite de véhicules (à conduite au moins partiellement automatisée), et notamment ceux qui ont pour but de contrôler la conduite en fonction d'informations déterminées dans l'environnement des véhicules à partir d'une analyse de données acquises dans ces derniers par leurs capteurs, et en particulier de données numériques d'images.

Certaines de ces informations d'environnement sont les délimitations des voies de circulation sur lesquelles circulent les véhicules, et à partir desquelles on peut, notamment, déterminer le nombre de voies de circulation d'une même route, la voie de circulation sur laquelle circule un véhicule, la position relative de ce dernier sur sa voie de circulation et la manaeuvre que ce véhicule doit effectuer, comme par exemple un dépassement par changement de voie de circulation ou un maintien dans sa voie de circulation. Il est donc indispensable de déterminer correctement les délimitations d'au moins la voie de circulation qui est empruntée par un véhicule (en particulier par rapport à un référentiel attaché à ce dernier).

Or, il arrive fréquemment, actuellement, que les délimitations soient temporairement confondues avec des éléments qui sont présents sur la voie de circulation, comme par exemple des reflets ou des joints de goudron, non seulement du fait du pouvoir de résolution assez moyen des images d'environnement acquises par les caméras embarquées et du positionnement de ces dernières, mais également du fait des conditions météorologiques et/ou d'éclairement variables. On comprendra en effet que la pluie, la glace, le brouillard ou un éclairement rasant peuvent induire des variations des couleurs acquises des délimitations, ce qui peut tromper les algorithmes et donc provoquer des erreurs de décision de conduite. En outre, il peut arriver que des délimitations soient localement masquées, et donc invisibles sur des images d'environnement acquises, notamment en cas de neige, de brouillard épais, ou de boue (ou tout autre matériau).

Il a certes été proposé un procédé d'assistance (par exemple dans le document US 2017/369057 A1 (GURGHIAN ALEXANDRU MIHAI [US] ET AL) 28 décembre 2017 (2017-12-28)) utilisant un réseau de neurones préalablement entraîné, au moyen d'une base de données constituée à partir de données d'environnement acquises lors de phases de roulage par au moins un capteur d'un véhicule d'analyse, afin de déterminer des délimitations, et un module de filtrage chargé de filtrer ces délimitations déterminées en fonction de la valeur d'un paramètre de confiance qui leur est attribué, afin de ne retenir que celles qui sont estimées suffisamment robustes (ou fiables). Cependant, une telle solution de filtrage s'avère « curative » et non préventive, dans la mesure où elle ne fait que trier les mauvaises détections résultant d'une acquisition et/ou d'une analyse imparfaite(s) une fois que le véhicule est déjà au niveau des délimitations concernées et donc potentiellement trop tard, mais ne corrige pas l'acquisition et l'analyse (permettant de réaliser ce même tri avant que le véhicule n'entre sur la zone comportant les délimitations détectées en amont du véhicule, et donc permettant ainsi leur prise en compte dans le processus d'analyse et de décision du véhicule). Par conséquent, cette solution de filtrage ne garantit pas que les délimitations filtrées sont effectivement utilisables pour contrôler la conduite automatisée d'un véhicule.

L'invention a donc notamment pour but d'améliorer la situation.

### Présentation de l'invention

Elle propose notamment à cet effet un procédé d'entraînement destiné à entraîner un réseau de neurones, lui-même destiné à détecter des délimitations d'une voie de circulation sur laquelle circule un véhicule à conduite au moins partiellement automatisée.

Ce procédé ordinateur, comme défini dans la revendication 1, comprenant, d'une part, un réseau de neurones d'entraînement se caractérise par le fait qu'il comprend :
- une première étape dans laquelle on acquiert des premières et secondes images respectivement de première et seconde portions différentes d'une voie de circulation, avec respectivement des premier et second capteurs installés selon des orientations différentes sur un véhicule d'analyse circulant sur la voie de circulation en simulant le véhicule (automatisé), et on enregistre chaque première image et chaque seconde image,
- une deuxième étape dans laquelle on constitue avec des secondes images successives enregistrées une image dite aérienne de cette voie de circulation dans une vue du dessus, puis on détermine des délimitations de cette voie de circulation dans cette image aérienne et des éléments susceptibles de représenter des délimitations de cette voie de circulation dans chaque première image, puis on détermine si ces éléments déterminés prolongent ces délimitations déterminées, et dans l'affirmative on enregistre dans une base de données chaque élément déterminé, tandis que dans la négative on enregistre dans cette base de données chaque élément déterminé en correspondance de la délimitation déterminée, et
- une troisième étape dans laquelle on entraîne le réseau de neurones avec les enregistrements de cette base de données afin qu'il apprenne qu'en présence d'un élément venant d'être déterminé dans une première image il doit utiliser soit cet élément s'il n'est pas stocké en correspondance d'une délimitation, soit la délimitation stockée en correspondance de cet élément.

Cette prise en compte du contexte du véhicule permet un entraînement (ou apprentissage) notablement plus complet et plus précis du réseau de neurones, de nature à lui permettre de déterminer plus facilement, plus précisément et de façon plus fiable des délimitations lors de phase d'assistance de la conduite d'un véhicule, et donc à présenter un taux d'erreur de détection (et en particulier de « faux positifs ») réduit par rapport aux réseaux de neurones de l'art antérieur.

Le procédé d'entraînement selon l'invention peut comporter d'autres caractéristiques qui peuvent être prises séparément ou en combinaison, et notamment :
- dans sa première étape on peut acquérir des premières images de premières portions successives de la voie de circulation situées chacune à une distance prédéfinie devant le véhicule d'analyse et des secondes images de secondes portions successives de la voie de circulation situées chacune à proximité immédiate du véhicule d'analyse ;
   + dans sa première étape on peut, par exemple, acquérir les secondes images de secondes portions successives de la voie de circulation qui sont situées à proximité immédiate d'une partie arrière du véhicule d'analyse ;
- dans sa première étape on peut enregistrer chaque première image et chaque seconde image en correspondance d'au moins une information contextuelle. Dans ce cas, dans sa deuxième étape, si les éléments déterminés prolongent les délimitations déterminées, on peut enregistrer dans la base de données chaque élément déterminé en correspondance de chaque information contextuelle enregistrée qui lui correspond, tandis que dans la négative on enregistre dans la base de données chaque élément déterminé en correspondance de la délimitation déterminée et de chaque information contextuelle enregistrée qui lui correspond, et dans la troisième étape on peut entraîner le réseau de neurones avec les enregistrements de la base de données afin qu'il apprenne qu'en présence d'au moins une information contextuelle en cours et d'un élément venant d'être déterminé dans une première image il doit utiliser soit cet élément s'il est stocké en correspondance de cette information contextuelle en cours, soit la délimitation stockée en correspondance de cette information contextuelle en cours et de cet élément ;
   + dans sa première étape on peut, par exemple, utiliser au moins une information contextuelle qui est choisie parmi une information météorologique relative à un environnement en cours du véhicule d'analyse, une information lumineuse représentative d'une luminosité extérieure devant le véhicule d'analyse, une information de masquage par une matière reçue par voie d'ondes dans le véhicule d'analyse, une activation du système d'éclairage extérieur du véhicule d'analyse, et une position angulaire du soleil par rapport à une ligne d'horizon située devant le véhicule d'analyse ;
      * dans sa première étape l'information météorologique peut être choisie parmi de la pluie, de la glace, de la neige, et du brouillard ;
      * dans sa première étape l'information météorologique peut être reçue par voie d'ondes dans le véhicule d'analyse ou bien fournie par un détecteur équipant le véhicule d'analyse ;
      * dans sa première étape on peut déterminer la position angulaire du soleil dans l'image acquise ou en fonction d'un horaire en cours et d'une position géographique en cours du véhicule d'analyse.

L'invention propose également un produit programme d'ordinateur comme défini dans la revendication 8 comprenant un jeu d'instructions qui, lorsqu'il est exécuté par des moyens de traitement, est propre à mettre en oeuvre un procédé d'entraînement du type de celui présenté ci-avant pour entraîner un réseau de neurones destiné à détecter des délimitations d'une voie de circulation sur laquelle circule un véhicule à conduite au moins partiellement automatisée.

L'invention propose également un dispositif d'entraînement, destiné à entraîner un réseau de neurones lui-même destiné à détecter des délimitations d'une voie de circulation sur laquelle circule un véhicule à conduite au moins partiellement automatisée.

Ce dispositif d'entraînement comme défini dans la revendication 9 se caractérise par le fait qu'il comprend au moins un processeur et au moins une mémoire agencés pour effectuer les opérations consistant à :
- obtenir des premières et secondes images respectivement de première et seconde portions différentes d'une voie de circulation, acquises avec respectivement des premier et second capteurs installés selon des orientations différentes sur un véhicule d'analyse circulant sur la voie de circulation en simulant le véhicule (automatisé), puis
- constituer avec des secondes images successives enregistrées une image dite aérienne de cette voie de circulation dans une vue du dessus, puis
- déterminer des délimitations de cette voie de circulation dans cette image aérienne et des éléments susceptibles de représenter des délimitations de cette voie de circulation dans chaque première image, puis
- déterminer si ces éléments déterminés prolongent ces délimitations déterminées, et dans l'affirmative enregistrer dans une base de données chaque élément déterminé, ou dans la négative enregistrer dans cette base de données chaque élément déterminé en correspondance de la délimitation déterminée, et
- entraîner le réseau de neurones avec les enregistrements de cette base de données afin qu'il apprenne qu'en présence d'un élément venant d'être déterminé dans une première image il doit utiliser soit cet élément s'il n'est pas stocké en correspondance d'une délimitation, soit la délimitation stockée en correspondance de cet élément.

L'invention propose également un ordinateur comprenant un réseau de neurones à entraîner et destiné à détecter des délimitations d'une voie de circulation sur laquelle circule un véhicule à conduite au moins partiellement automatisée, et, d'autre part, un dispositif d'entraînement du type de celui présenté ci-avant et couplé au réseau de neurones.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un ordinateur équipé d'un exemple de réalisation d'un dispositif d'entraînement selon l'invention et d'un réseau de neurones à former, et
[Fig. 2] illustre schématiquement un exemple d'algorithme mettant en oeuvre un procédé d'entraînement selon l'invention.

### Description détaillée de l'invention

L'invention a notamment pour but de proposer un procédé d'entraînement, et un dispositif d'entraînement DE associé, destinés à permettre l'entraînement d'un réseau de neurones RN, lui-même destiné ensuite à détecter des délimitations d'une voie de circulation sur laquelle circule un véhicule à conduite au moins partiellement automatisée, y compris lorsque ces délimitations sont difficilement observables.

Dans ce qui suit, on considère, à titre d'exemple non limitatif, que le véhicule à conduite automatisée (ou autonome) est de type automobile. Il s'agit par exemple d'une voiture. Mais l'invention n'est pas limitée à ce type de véhicule. Elle concerne en effet tout type de véhicule terrestre à conduite au moins partiellement automatisée et pouvant circuler sur des voies de circulation terrestres. Ainsi, il pourra aussi s'agir d'un véhicule utilitaire, d'un cyclomoteur, d'une motocyclette, d'un minibus, d'un car, d'un robot de stockage dans un entrepôt, ou d'un engin de voirie, par exemple.

Comme évoqué plus haut, l'invention propose notamment un procédé d'entraînement destiné à permettre l'entraînement d'un réseau de neurones RN, lui-même destiné ensuite à détecter des délimitations d'une voie de circulation sur laquelle circule un véhicule à conduite au moins partiellement automatisée, On comprendra que ce réseau de neurones RN est destiné, une fois entraîné, à équiper le véhicule précité, ci-après dit automatisé. Plus précisément, ce réseau de neurones RN est destiné à faire partie d'un dispositif d'assistance à la conduite équipant un véhicule automatisé, afin de déterminer des délimitations d'au moins la voie de circulation sur laquelle circule ce dernier.

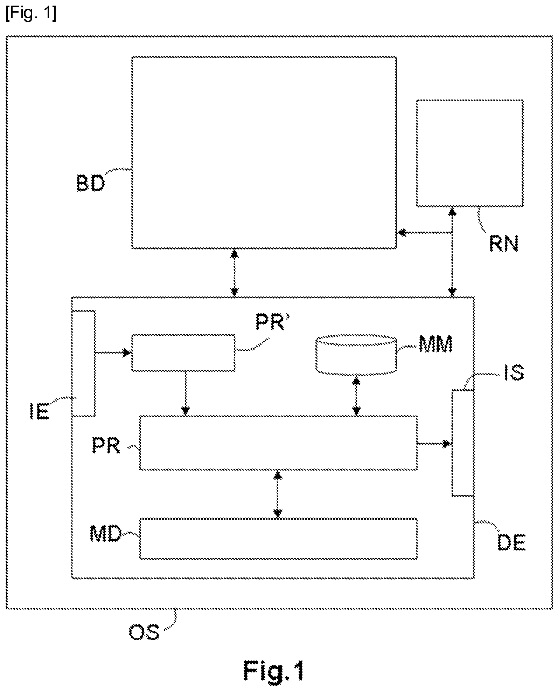

Le procédé d'entraînement, selon l'invention, peut être mis en oeuvre au moins partiellement par un dispositif d'entraînement DE qui comprend à cet effet au moins un processeur PR, par exemple de signal numérique (ou DSP (« Digital Signal Processor »)), et une mémoire MD, comme illustré non limitativement sur la figure 1. Par ailleurs, la mise en oeuvre de ce procédé d'entraînement nécessite au moins un véhicule d'analyse, simulant le véhicule automatisé, et équipé d'au moins des premier et second capteurs installés respectivement selon des première et seconde orientations différentes afin d'acquérir respectivement des premières et secondes images respectivement de première et seconde portions différentes de la voie de circulation sur laquelle il circule.

Par exemple, chacun de ces premier et second capteurs peut comprendre au moins une caméra chargée d'acquérir des images numériques dans l'environnement du véhicule d'analyse. Comme on le verra plus loin ces capteurs sont destinés à acquérir des données d'environnement permettant la détermination d'éléments sur la voie de circulation sur laquelle circule leur véhicule d'analyse.

A titre d'exemple non limitatif, le premier capteur peut acquérir des premières images de premières portions successives de la voie de circulation qui sont situées chacune à une distance prédéfinie (par exemple comprise entre 0 m et 100 m devant le (ou en amont du) véhicule d'analyse, et le second capteur peut acquérir des secondes images de secondes portions successives de la voie de circulation qui sont situées chacune à proximité immédiate du véhicule d'analyse (par exemple comprise entre 0 m et 5 m (en amont et/ou en aval du véhicule d'analyse)). A cet effet, le premier capteur peut, par exemple, comprendre au moins une caméra installée dans une partie avant du véhicule d'analyse (par exemple sur le pare-brise ou sur le rétroviseur intérieur ou sur le toit ou dans un montant de baie ou encore dans une calandre (dans le cadre d'un véhicule assez haut tel qu'un pick-up ou un bus)) et chargée d'acquérir des images numériques au moins devant ce véhicule d'analyse (à « longue distance ») et éventuellement sur une partie au moins de ses deux côtés latéraux. Un tel premier capteur est souvent dit « frontal » par l'homme de l'art car il a un axe principal d'observation qui est faiblement incliné par rapport à la voie de circulation.

Pour ce qui concerne le second capteur, il peut, par exemple, acquérir des secondes images de secondes portions successives de la voie de circulation qui sont situées à proximité immédiate de la partie arrière du véhicule d'analyse. Un tel second capteur est souvent dit « de carrosserie » par l'homme de l'art, car il comprend habituellement au moins une caméra fixée sur la carrosserie, dans une partie basse, en ayant son axe principal d'observation fortement incliné par rapport à la voie de circulation (afin de donner des images quasiment en vue du dessus). Ce type de capteur est par exemple chargé de fournir des images de l'environnement arrière pour l'aide au stationnement (on parle alors de caméra de recul en cas d'implantation à l'arrière du véhicule). Mais, le second capteur pourrait, par exemple, acquérir des secondes images de secondes portions successives de la voie de circulation qui sont situées à proximité immédiate de la partie avant du véhicule d'analyse pour constituer une vue aérienne par observation directe, ou par mémorisation (et juxtaposition) d'acquisitions successives afin d'étendre la surface ainsi observée de « dessus ».

Comme illustré non limitativement sur la figure 1, le dispositif d'entraînement DE peut faire au moins partiellement partie d'un ordinateur OS qui comprend également le réseau de neurones RN devant être entraîné (ou formé). Mais cela n'est pas obligatoire. En effet, le dispositif d'entraînement DE pourrait comprendre son propre calculateur et être couplé à un ordinateur OS comprenant le réseau de neurones RN devant être entraîné (ou formé). Par . conséquent, le dispositif d'entraînement DE peut être réalisé sous la forme d'une combinaison de circuits ou composants électriques ou électroniques (ou « hardware ») et de modules logiciels (ou « software »). La mémoire MD est vive afin de stocker des instructions pour la mise en oeuvre par le processeur PR d'une partie au moins du procédé d'entraînement.

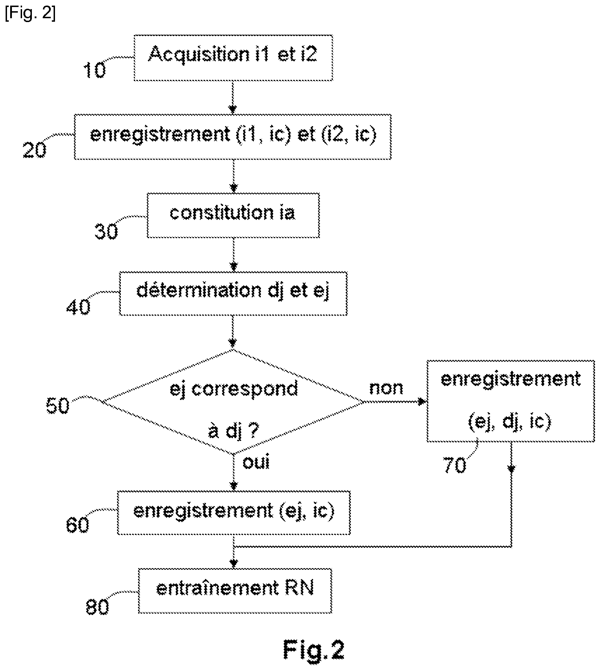

On notera que l'ordinateur OS peut être fixe ou portable ou bien peut faire partie d'un serveur. Il peut être embarqué dans le véhicule d'analyse ou être déporté pour un traitement de masse (éventuellement dans un nuage (ou « cloud »)). Le procédé d'entraînement, selon l'invention, comprend des première 10-20, deuxième 30-70 et troisième 80 étapes décrites ci-après en référence à la figure 2.

Dans une sous-étape 10 de la première étape 10-20 du procédé d'entraînement, on acquiert des premières i1 et secondes i2 images respectivement de première et seconde portions différentes de la voie de circulation du véhicule d'analyse, avec respectivement les premier et second capteurs de ce dernier (installés selon des orientations différentes). Puis, dans une sous-étape 20 de la première étape 10-20 on enregistre chaque première image i1 et chaque seconde image i2.

On comprendra que les images i1 et i2 sont acquises lors de phases de roulage du véhicule d'analyse, et qu'elles sont enregistrées dans une mémoire immédiatement après grâce à un ordinateur embarqué dans le véhicule d'analyse.

Dans une sous-étape 30 de la deuxième étape 30-70 du procédé d'entraînement, on (le processeur PR et la mémoire MD) constitue(nt) avec des secondes images i2 successives (enregistrées dans la première étape 10-20) une image dite aérienne de la voie de circulation concernée dans une vue du dessus. Par exemple, on utilise entre 3 et 5 secondes images i2 successives pour constituer une image aérienne ia. Il est aussi possible de raisonner en distance parcourue plutôt qu'en temps (ou nombre d'images), notamment lorsque le véhicule circule à vitesse lente. Dans ce cas, il est possible de ne pas remettre à jour la carte pour économiser des ressources de calcul et/ou pour éviter de perdre les anciennes données.

Puis, dans une sous-étape 40 de la deuxième étape 30-70 du procédé d'entraînement, on (le processeur PR et la mémoire MD) détermine(nt) des délimitations dj de la voie de circulation dans cette image aérienne ia (constituée dans la sous-étape 30) et des éléments ej qui sont susceptibles de représenter des délimitations dj de cette voie de circulation dans chaque première image i1. Il est important de noter que les délimitations dj déterminées dans une image aérienne ia sont considérées comme celles de la voie de circulation, de façon certaine, alors que les éléments ej peuvent être ces mêmes délimitations dj ou bien des reflets ou des joints de goudron.

Puis, dans une sous-étape 50 de la deuxième étape 30-70 du procédé d'entraînement, on (le processeur PR et la mémoire MD) détermine(nt) si ces éléments déterminés ej prolongent ces délimitations déterminées dj. Pour ce faire, on peut, par exemple, déterminer par le calcul si la position géographique d'un élément ej correspond à la position géographique de la délimitation déterminée dj correspondante (éventuellement à une extrapolation d'une prolongation de cette dernière (dj) compte tenu de sa forme), mais aussi si la forme de cet élément ej correspond à la forme de cette délimitation déterminée dj (éventuellement à celle d'une extrapolation d'une prolongation de cette dernière (dj) compte tenu de sa forme).

Dans l'affirmative (et donc en cas de prolongation effective (ou de correspondance)), on (le processeur PR et la mémoire MD) enregistre, dans une sous-étape 60 de la deuxième étape 30-70 du procédé d'entraînement, dans une base de données BD, chaque élément ej déterminé.

En revanche, dans la négative (et donc en l'absence de prolongation effective (ou de correspondance)), on (le processeur PR et la mémoire MD) enregistre(nt), dans une sous-étape 70 de la deuxième étape 30-70 du procédé d'entraînement, dans la base de données BD, chaque élément déterminé ej en correspondance de la délimitation déterminée dj. La base de données BD stocke alors des premiers enregistrements (ej) et des seconds enregistrements (ej', dj').

Comme illustré non limitativement sur la figure 1, la base de données BD peut faire partie de l'ordinateur OS, afin d'être accessible directement au dispositif d'entraînement DE et au réseau de neurones RN. Mais, elle (BD) pourrait faire partie d'un autre ordinateur (éventuellement distant) ou d'un serveur couplé à l'ordinateur OS et accessible via au moins un réseau de communication.

Puis, dans une sous-étape 70 de la troisième étape 80, on (le processeur PR et la mémoire MD) entraîne(nt) le réseau de neurones RN avec les premiers et seconds enregistrements de la base de données BD. Ce type d'entraînement est destiné à apprendre au réseau de neurones RN qu'en présence d'un élément venant d'être déterminé dans une première image i1 (par un premier capteur de son futur véhicule automatisé) il doit utiliser soit cet élément (premier enregistrement) s'il n'est pas stocké en correspondance d'une délimitation, soit la délimitation stockée en correspondance de cet élément (dans un second enregistrement).

On notera que ce type d'entraînement, de type dit « supervisé », est classique et bien connu de l'homme de l'art.

On comprendra que lors de l'entraînement, le réseau de neurones RN va recevoir en entrée au moins une première image i1 dans laquelle il va déterminer des éléments ej susceptibles de représenter des délimitations dj. Puis, le réseau de neurones RN va rechercher dans la base de données BD un premier ou second enregistrement comprenant cet élément ej. S'il trouve un premier enregistrement, le réseau de neurones RN apprend que le même élément ej qu'il détectera dans le futur sera effectivement une délimitation dj de la voie de circulation de son véhicule automatisé. En revanche, s'il trouve un second enregistrement, le réseau de neurones RN apprend que le même élément ej qu'il détectera dans le futur ne sera pas une délimitation de la voie de circulation de son véhicule automatisé et qu'à la place il devra utiliser la délimitation dj initialement associée à cet élément ej.

Lorsque l'on présente au réseau de neurones RN suffisamment d'exemples (c'est-à-dire de couples [entrée (images), sortie (délimitations) associée]), il apprend sa propre représentation de ce qu'est une délimitation dans l'image. Il faut donc constituer une base de données annotée (c'est-à-dire qui indique la sortie à obtenir pour toute donnée d'entrée) suffisamment « riche » (en termes de couverture des cas rencontrés) pour permettre au réseau de neurones RN d'être plus performant sur un plus grand nombre de situations. L'approche proposée permet, par filtrage basée sur l'analyse des détections conjointes sur l'image frontale et sur la vue aérienne locale, d'obtenir ces annotations et donc de constituer la base de données d'apprentissage associée de manière automatisée. Cela permet de traiter davantage de cas, donc de couvrir davantage de cas dans la base de données d'apprentissage, donc de rendre le réseau de neurones RN (et le système de décision dans lequel il sera implémenté) plus robuste (en particulier aux cas limites) et plus performant (en particulier moins de faux positifs).

L'entraînement (ou l'apprentissage) du réseau de neurones RN est notablement plus complet et plus précis, et donc de nature à lui permettre, une fois qu'il fera partie d'un dispositif d'assistance à la conduite équipant un véhicule automatisé, de déterminer plus facilement, plus précisément et de façon plus fiable des délimitations lors d'une phase d'assistance de la conduite de ce véhicule automatisé.

On notera qu'il est particulièrement avantageux dans la sous-étape 20 de la première étape 10-20 d'enregistrer chaque première image i1 et chaque seconde image i2 en correspondance d'au moins une information contextuelle ic. On obtient alors des multiplets de type (i1, ic) et (i2, ic). On comprendra que pour ce faire le véhicule d'analyse est alimenté en direct en information(s) contextuelle(s) ic de façon automatisée ou de façon assistée ou supervisée par un technicien. On notera que le dispositif d'entraînement DE peut éventuellement comprendre un module additionnel présent dans l'ordinateur embarqué et chargé de contrôler les enregistrements des multiplets (i1, ic) et (i2, ic).

Dans ce cas, dans la sous-étape 60 de la deuxième étape 30-70 du procédé d'entraînement, si les éléments déterminés prolongent les (ou correspondent aux) délimitations déterminées (affirmative), on (le processeur PR et la mémoire MD) enregistre(nt) dans la base de données BD, chaque élément ej déterminé en correspondance de chaque information contextuelle enregistrée ic qui lui correspond (c'est-à-dire qui fait partie du multiplet (i1, ic) comportant la première image i1 dans laquelle il a été détecté).

En revanche, dans la négative (et donc en l'absence de prolongation effective (ou de correspondance)), on (le processeur PR et la mémoire MD) enregistre(nt), dans la sous-étape 70 de la deuxième étape 30-70 du procédé d'entraînement, dans la base de données BD, chaque élément déterminé ej en correspondance de la délimitation déterminée dj et de chaque information contextuelle enregistrée ic qui lui correspond (c'est-à-dire qui fait partie du multiplet (i1, ic) comportant la première image i1 dans laquelle il a été détecté). La base de données BD stocke alors des premiers enregistrements de type (ej, ic) et des seconds enregistrements de type (ej', dj', ic').

Ensuite, dans la sous-étape 70 de la troisième étape 80, on (le processeur PR et la mémoire MD) entraîne(nt) le réseau de neurones RN avec les premiers et seconds enregistrements de la base de données BD. Ainsi, le réseau de neurones RN apprend qu'en présence d'au moins une information contextuelle en cours (concernant son futur véhicule automatisé) et d'un élément venant d'être déterminé dans une première image i1 (par un premier capteur de son futur véhicule automatisé) il doit utiliser soit cet élément s'il est stocké en correspondance de cette information contextuelle en cours (dans un premier enregistrement), soit la délimitation qui est stockée en correspondance de cette information contextuelle en cours et de cet élément (dans un second enregistrement).

En présence de cette option avec utilisation d'informations contextuelles, lors de l'entraînement, le réseau de neurones RN va recevoir en entrée, d'une part, une première image i1 dans laquelle il va déterminer des éléments ej susceptibles de représenter des délimitations dj, et, d'autre part, au moins une information contextuelle ic. Puis, le réseau de neurones RN va rechercher dans la base de données BD un premier ou second enregistrement comprenant cet élément ej et chaque information contextuelle ic reçue. S'il trouve un premier enregistrement, le réseau de neurones RN apprend que le même élément ej qu'il détectera dans le futur dans les mêmes conditions contextuelles (ic) sera effectivement une délimitation dj de la voie de circulation de son véhicule automatisé. En revanche, s'il trouve un second enregistrement, le réseau de neurones RN apprend que le même élément ej qu'il détectera dans le futur dans les mêmes conditions contextuelles (ic) ne sera pas une délimitation de la voie de circulation de son véhicule automatisé et qu'à la place il devra utiliser la délimitation dj initialement associée à cet élément ej dans les mêmes conditions contextuelles (ic).

Par exemple, dans la sous-étape 20 de la première étape 10-20 on (le processeur PR et la mémoire MD) peu(ven)t utiliser au moins une information contextuelle choisie parmi une information météorologique relative à l'environnement en cours du véhicule d'analyse, une information lumineuse représentative de la luminosité extérieure devant le véhicule d'analyse, une information de masquage par une matière (telle que de la boue, de la terre, ou du sable) reçue par voie d'ondes dans le véhicule d'analyse, une activation du système d'éclairage extérieur du véhicule d'analyse, et une position angulaire du soleil par rapport à une ligne d'horizon située devant le véhicule d'analyse. A titre d'exemple, chaque information météorologique peut être choisie parmi de la pluie, de la glace, de la neige, et du brouillard.

Egalement à titre d'exemple, chaque information météorologique peut être reçue par voie d'ondes dans le véhicule d'analyse (par un module de communication de ce dernier, ou bien un téléphone mobile intelligent (ou « smartphone ») ou une tablette accompagnant un technicien embarqué), ou bien peut être fournie par un détecteur équipant le véhicule d'analyse (comme par exemple un détecteur de pluie).

Egalement à titre d'exemple, on peut déterminer la position angulaire du soleil dans une image acquise (en particulier une première i1) ou en fonction de l'horaire en cours et de la position géographique en cours du véhicule d'analyse, par exemple fournie par un dispositif d'aide à la navigation qu'il comprend de façon permanente ou de façon temporaire (lorsqu'il fait partie d'un équipement portable ou bien d'un téléphone mobile intelligent ou d'une tablette accompagnant un technicien).

On notera qu'une fois que le réseau de neurones RN fait partie d'un dispositif d'assistance à la conduite équipant un véhicule automatisé, s'il a été entraîné en tenant compte d'information(s) contextuelle(s), il est informé de chaque information contextuelle à prendre en compte (éventuellement une seule selon l'entraînement qu'il a reçu) soit par un calculateur de ce véhicule automatisé, soit par un module de communication présent dans ce véhicule automatisé de façon permanente ou de façon temporaire (et faisant partie, par exemple, d'un téléphone mobile intelligent ou d'une tablette d'un passager).

On notera également qu'une fois que le réseau de neurones RN est entraîné et fait partie d'un dispositif d'assistance à la conduite, il n'a a priori, plus besoin d'être couplé à une base de données similaire à sa base de données BD d'entraînement. Mais on pourrait envisager que le dispositif d'assistance à la conduite comprenne une base de données pouvant être complétée par apprentissage de nouvelles situations lors de phases de roulage du véhicule automatisé. Dans ce cas, on peut également envisager que le réseau de neurones RN continue d'apprendre et donc réduise au cours du temps son taux d'erreur de détection de délimitation grâce à ces compléments de la base de données. Cependant il est actuellement préférable de constituer une base de données d'apprentissage des nouveaux cas (ceux pour lesquels le système s'est mal comporté, ce qui est détectable par l'approche proposée qui est la même que celle permettant de filtrer les bonnes détections pour alimenter la base de données d'apprentissage initiale), puis de faire réapprendre le réseau de neurones RN avec ces nouveaux cas en plus des cas initiaux. Cette dernière étape peut avoir lieu de manière maîtrisée par le constructeur (par exemple en récoltant ces cas dans le nuage (ou « cloud ») pour l'ensemble des véhicules, au moment des passages en concession par exemple), puis en redistribuant les réseaux de neurones mis à jour par le biais de mises à jour validées. Une approche intermédiaire consiste à réaliser des mises à jour locales (c'est-à-dire au niveau de chaque véhicule), mais sur des portions souvent empruntées et pour lesquelles les « corrections » de la partie filtrage ont pu être confirmées par le nombre d'occurrences d'apparition.

On notera également que l'invention propose aussi un produit programme d'ordinateur comprenant un jeu d'instructions qui, lorsqu'il est exécuté par des moyens de traitement de type circuits électroniques (ou hardware), comme par exemple le processeur PR, est propre à mettre en oeuvre le procédé d'entraînement décrit ci-avant pour entraîner un réseau de neurones RN destiné à détecter des délimitations d'une voie de circulation sur laquelle circule un véhicule à conduite au moins partiellement automatisée.

On notera également que sur la figure 1 le dispositif d'entraînement DE est très schématiquement illustré avec sa mémoire vive MD et son processeur PR qui peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Mais, comme illustré non limitativement sur la figure 1, le dispositif d'entraînement DE peut aussi comprendre une mémoire de masse MM, notamment pour le stockage temporaire des images acquises, des éventuelles informations contextuelles, des positions géographiques, et d'éventuelles données intermédiaires intervenant dans tous ses calculs et traitements. Par ailleurs, ce dispositif d'entraînement DE peut aussi comprendre une interface d'entrée IE pour la réception d'au moins les images acquises, les éventuelles informations contextuelles et les positions géographiques, pour les utiliser dans des calculs ou traitements, éventuellement après les avoir mises en forme et/ou démodulées et/ou amplifiées, de façon connue en soi, au moyen d'un processeur de signal numérique PR'. De plus, ce dispositif d'entraînement DE peut aussi comprendre une interface de sortie IS, notamment pour la transmission de commandes et instructions au réseau de neurones RN pendant son entraînement.

On notera également qu'une ou plusieurs étapes et/ou une ou plusieurs sous-étapes du procédé d'entraînement peuvent être effectuées par des composants différents. Ainsi, le procédé d'entraînement peut-être mis en oeuvre par une pluralité de processeurs de signal numérique, mémoire vive, mémoire de masse, interface d'entrée, interface de sortie.

## Revendications

1. Procédé d'entraînement d'un réseau de neurones (RN) destiné à détecter des délimitations d'une voie de circulation sur laquelle circule un véhicule à conduite au moins partiellement automatisée, **caractérisé en ce qu'**il comprend :
- une première étape (10-20) dans laquelle un processeur acquiert des premières et secondes images respectivement de première et seconde portions différentes d'une voie de circulation, avec respectivement des premier et second capteurs installés selon des orientations différentes sur un véhicule d'analyse circulant sur ladite voie de circulation en simulant ledit véhicule, et un processeur enregistre chaque première image et chaque seconde image, le premier capteur est dit « frontal », le deuxième capteur est dit « de carrosserie »,
- une deuxième étape (30-70) dans laquelle un processeur constitue avec des secondes images successives enregistrées une image dite aérienne de ladite voie de circulation dans une vue du dessus, puis un processeur détermine des délimitations de ladite voie de circulation dans cette image aérienne et des éléments susceptibles de représenter des délimitations de ladite voie de circulation dans chaque première image, puis un processeur détermine si ces éléments déterminés correspondent à ces délimitations déterminées, et dans l'affirmative un processeur enregistre dans une base de données (BD) chaque élément déterminé, tandis que dans la négative un processeur enregistre dans ladite base de données (BD) chaque élément déterminé en correspondance de la délimitation déterminée, et
- une troisième étape (80) dans laquelle un processeur entraîne ledit réseau de neurones (RN) avec les enregistrements de ladite base de données (BD) afin qu'il apprenne qu'en présence d'un élément venant d'être déterminé dans une première image il doit utiliser soit cet élément s'il n'est pas stocké en correspondance d'une délimitation, soit la délimitation stockée en correspondance de cet élément.

2. Procédé selon la revendication 1, **caractérisé en ce que** dans ladite première étape (10-20) on acquiert des premières images de premières portions successives de ladite voie de circulation situées chacune à une distance prédéfinie devant ledit véhicule d'analyse et des secondes images de secondes portions successives de ladite voie de circulation situées chacune à proximité immédiate dudit véhicule d'analyse.

3. Procédé selon la revendication 2, **caractérisé en ce que** dans ladite première étape (10-20) on acquiert lesdites secondes images de secondes portions successives de ladite voie de circulation situées à proximité immédiate d'une partie arrière dudit véhicule d'analyse.

4. Procédé selon l'une des revendications 1 à 3, **caractérisé en ce que** dans ladite première étape (10-20) on enregistre chaque première image et chaque seconde image en correspondance d'au moins une information contextuelle, **en ce que** dans ladite deuxième étape (30-70) si les éléments déterminés correspondent à les délimitations déterminées, on enregistre dans ladite base de données (BD) chaque élément déterminé en correspondance de chaque information contextuelle enregistrée qui lui correspond, tandis que dans la négative on enregistre dans ladite base de données (BD) chaque élément déterminé en correspondance de la délimitation déterminée et de chaque information contextuelle enregistrée qui lui correspond, et **en ce que** dans ladite troisième étape (80) on entraîne ledit réseau de neurones (RN) avec les enregistrements de ladite base de données (BD) afin qu'il apprenne qu'en présence d'au moins une information contextuelle en cours et d'un élément venant d'être déterminé dans une première image il doit utiliser soit cet élément s'il est stocké en correspondance de cette information contextuelle en cours, soit la délimitation stockée en correspondance de cette information contextuelle en cours et de cet élément.

5. Procédé selon la revendication 4, **caractérisé en ce que** dans ladite première étape (10-20) on utilise au moins une information contextuelle choisie parmi une information météorologique relative à un environnement en cours dudit véhicule d'analyse, une information lumineuse représentative d'une luminosité extérieure devant ledit véhicule d'analyse, une information de masquage par une matière reçue par voie d'ondes dans ledit véhicule d'analyse, une activation du système d'éclairage extérieur dudit véhicule d'analyse, et une position angulaire du soleil par rapport à une ligne d'horizon située devant ledit véhicule d'analyse.

6. Procédé selon la revendication 5, **caractérisé en ce que** dans ladite première étape (10-20) ladite information météorologique est reçue par voie d'ondes dans ledit véhicule d'analyse ou fournie par un détecteur équipant ledit véhicule d'analyse.

7. Procédé selon la revendication 5 ou 6, **caractérisé en ce que** dans ladite première étape (10-20) on détermine ladite position angulaire du soleil dans ladite image acquise ou en fonction d'un horaire en cours et d'une position géographique en cours dudit véhicule d'analyse.

8. Produit programme d'ordinateur comprenant un jeu d'instructions qui, lorsqu'il est exécuté par des moyens de traitement, est propre à mettre en oeuvre le procédé d'entraînement selon l'une des revendications précédentes pour entraîner un réseau de neurones (RN) destiné à détecter des délimitations d'une voie de circulation sur laquelle circule un véhicule à conduite au moins partiellement automatisée.

9. Dispositif d'entraînement (DE) pour entraîner un réseau de neurones (RN) destiné à détecter des délimitations d'une voie de circulation sur laquelle circule un véhicule à conduite au moins partiellement automatisée, **caractérisé en ce qu'**il comprend au moins un processeur (PR) et au moins une mémoire (MD) agencés pour effectuer les opérations consistant à :
- obtenir des premières et secondes images respectivement de première et seconde portions différentes d'une voie de circulation, acquises avec respectivement des premier et second capteurs installés selon des orientations différentes sur un véhicule d'analyse circulant sur ladite voie de circulation en simulant ledit véhicule, puis
- constituer avec des secondes images successives enregistrées une image dite aérienne de ladite voie de circulation dans une vue du dessus, puis
- déterminer des délimitations de ladite voie de circulation dans cette image aérienne et des éléments susceptibles de représenter des délimitations de ladite voie de circulation dans chaque première image, puis
- déterminer si ces éléments déterminés prolongent ces délimitations déterminées, et dans l'affirmative enregistrer dans une base de données (BD) chaque élément déterminé, ou dans la négative enregistrer dans ladite base de données (BD) chaque élément déterminé en correspondance de la délimitation déterminée, et
- entraîner ledit réseau de neurones (RN) avec les enregistrements de ladite base de données (BD) afin qu'il apprenne qu'en présence d'un élément venant d'être déterminé dans une première image il doit utiliser soit cet élément s'il n'est pas stocké en correspondance d'une délimitation, soit la délimitation stockée en correspondance de cet élément.

10. Ordinateur (OS) comprenant un réseau de neurones (RN) à entraîner et destiné à détecter des délimitations d'une voie de circulation sur laquelle circule un véhicule à conduite au moins partiellement automatisée, **caractérisé en ce qu'**il comprend en outre un dispositif d'entraînement (DE) selon la revendication 9, couplé audit réseau de neurones (RN).

## Patentansprüche

1. Verfahren zum Trainieren eines neuronalen Netzes (RN) zur Erkennung der Grenzen einer Fahrspur, auf der ein zumindest teilweise automatisiert fahrendes Fahrzeug fährt, **dadurch gekennzeichnet, dass** es Folgendes umfasst:
- einen ersten Schritt (10-20), in dem ein Prozessor erste und zweite Bilder von ersten bzw. zweiten unterschiedlichen Abschnitten einer Fahrspur erfasst, wobei jeweils erste und zweite Sensoren in unterschiedlichen Ausrichtungen an einem auf der Fahrspur fahrenden Analysefahrzeug installiert sind indem das Fahrzeug simuliert wird und ein Prozessor jedes erste Bild und jedes zweite Bild aufzeichnet, wird der erste Sensor als "Frontalsensor" bezeichnet, der zweite Sensor wird als "Karosserie" bezeichnet.
- einen zweiten Schritt (30-70), in dem ein Prozessor mit zweiten aufeinanderfolgenden aufgezeichneten Bildern ein sogenanntes Luftbild der Fahrspur in einer Ansicht von oben erstellt, dann bestimmt ein Prozessor die Grenzen der Fahrspur in diesem Luftbild und Elemente, die in jedem ersten Bild Abgrenzungen der Fahrspur darstellen können, dann bestimmt ein Prozessor, ob diese bestimmten Elemente diesen bestimmten Abgrenzungen entsprechen, und wenn ja, zeichnet ein Prozessor jedes Element in einer Datenbank (BD) auf. ermittelt, im negativen Fall a Der Prozessor zeichnet in der Datenbank (BD) jedes bestimmte Element auf, das der bestimmten Abgrenzung entspricht, und
- einen dritten Schritt (80), in dem ein Prozessor das neuronale Netzwerk (RN) mit den Aufzeichnungen der Datenbank (BD) trainiert, so dass er erfährt, dass er bei Vorhandensein eines Elements, das gerade in einem ersten Bild bestimmt wurde, es verwenden muss entweder dieses Element, wenn es nicht entsprechend einer Abgrenzung gespeichert ist, oder die Abgrenzung, die entsprechend diesem Element gespeichert ist.

2. Verfahren nach Anspruch 1, **dadurch gekennzeichnet, dass** wir im ersten Schritt (10-20) erste Bilder von ersten aufeinanderfolgenden Abschnitten der Fahrspur erfassen, die sich jeweils in einer vordefinierten Entfernung vor dem Analysefahrzeug befinden, und zweite Bilder von zweiten aufeinanderfolgenden Abschnitten Teile der Fahrspur befinden sich jeweils in unmittelbarer Nähe des Analysefahrzeugs.

3. Verfahren nach Anspruch 2, **dadurch gekennzeichnet, dass** im ersten Schritt (10-20) die zweiten Bilder von zweiten aufeinanderfolgenden Abschnitten der Fahrspur erfasst werden, die sich in unmittelbarer Nähe eines hinteren Teils des Analysefahrzeugs befinden.

4. Verfahren nach einem der Ansprüche 1 bis 3, **dadurch gekennzeichnet, dass** im ersten Schritt (10-20) jedes erste Bild und jedes zweite Bild in Übereinstimmung mit mindestens einer Kontextinformation aufgezeichnet werden, dass im zweiten Schritt (30 -70) Wenn die bestimmten Elemente den bestimmten Grenzen entsprechen, wird jedes bestimmte Element in der genannten Datenbank (BD) entsprechend jeder aufgezeichneten Kontextinformation, die ihm entspricht, aufgezeichnet, während wir im Negativ jedes Element in der genannten Datenbank (BD) aufzeichnen in Übereinstimmung mit der ermittelten Abgrenzung und jeder ihr entsprechenden aufgezeichneten Kontextinformation ermittelt wird, und dass im dritten Schritt (80) das neuronale Netzwerk (RN) mit den Aufzeichnungen der Datenbank (BD) trainiert wird, so dass es das lernt Das Vorhandensein mindestens einer aktuellen Kontextinformation und eines gerade ermittelten Elements in einem ersten Bild muss entweder dieses Element verwenden, wenn es in Übereinstimmung mit dieser aktuellen Kontextinformation gespeichert ist, d. h. die in Übereinstimmung mit dieser aktuellen Kontextinformation gespeicherte Abgrenzung und dieses Element.

5. Verfahren nach Anspruch 4, **dadurch gekennzeichnet, dass** wir im ersten Schritt (10-20) mindestens eine Kontextinformation verwenden, die aus meteorologischen Informationen ausgewählt wird, die sich auf eine aktuelle Umgebung des Analysefahrzeugs beziehen, und Lichtinformationen, die für die äußere Helligkeit vor uns repräsentativ sind des Analysefahrzeugs, Maskieren von Informationen durch ein Material, das von Wellen in dem Analysefahrzeug empfangen wird, Aktivierung des Außenbeleuchtungssystems des Analysefahrzeugs und einer Winkelposition der Sonne relativ zu einer Horizontlinie, die sich vor dem Analysefahrzeug befindet.

6. Verfahren nach Anspruch 5, **dadurch gekennzeichnet, dass** im ersten Schritt (10-20) die meteorologischen Informationen durch Wellen im Analysefahrzeug empfangen oder von einem Detektor bereitgestellt werden, mit dem das Analysefahrzeug ausgestattet ist.

7. Verfahren nach Anspruch 5 oder 6, **dadurch gekennzeichnet, dass** im ersten Schritt (10-20) die Winkelposition der Sonne im erfassten Bild oder in Abhängigkeit eines aktuellen Zeitplans und einer dabei durchgeführten geografischen Position bestimmt wird Analysefahrzeug.

8. Computerprogrammprodukt, umfassend einen Befehlssatz, der bei Ausführung durch Verarbeitungsmittel in der Lage ist, das Trainingsverfahren nach einem der vorhergehenden Ansprüche zu implementieren, um ein neuronales Netzwerk (RN) zu trainieren, das die Grenzen einer Fahrspur erkennen soll mit dem ein zumindest teilautomatisiert fahrendes Fahrzeug unterwegs ist.

9. Trainingsgerät (DE) zum Trainieren eines neuronalen Netzes (RN) zur Erkennung der Grenzen einer Fahrspur, auf der ein zumindest teilautomatisiert fahrendes Fahrzeug fährt, **dadurch gekennzeichnet, dass** es mindestens einen Prozessor (PR) umfasst und mindestens einen Speicher (MD), der so angeordnet ist, dass er folgende Operationen ausführt:
- Erste bzw. zweite Bilder von ersten bzw. zweiten unterschiedlichen Abschnitten einer Fahrspur zu erhalten, die mit ersten bzw. zweiten Sensoren erfasst werden, die in unterschiedlichen Ausrichtungen an einem Analysefahrzeug installiert sind, das auf der Fahrspur fährt, indem das Fahrzeug simuliert wird
- dann mit aufeinanderfolgenden zweiten Aufnahmebildern ein sogenanntes Luftbild der besagten Fahrspur in einer Draufsicht erstellen
- Bestimmen Sie dann die Grenzen der Fahrspur in diesem Luftbild und Elemente, die wahrscheinlich die Grenzen der Fahrspur in jedem ersten Bild darstellen
- Bestimmen, ob diese bestimmten Elemente diese bestimmten Abgrenzungen erweitern, und wenn ja, jedes bestimmte Element in einer Datenbank (BD) aufzeichnen, oder, wenn nicht, jedes bestimmte Element, das der bestimmten Abgrenzung entspricht, in der Datenbank (BD) aufzeichnen, und
- Trainieren Sie das neuronale Netzwerk (RN) mit den Datensätzen der Datenbank (BD), damit es lernt, dass es bei Vorhandensein eines Elements, das gerade in einem ersten Bild bestimmt wurde, entweder dieses Element verwenden muss, in dessen Zusammenhang es nicht gespeichert ist eine Abgrenzung, d. h. die Abgrenzung, die entsprechend diesem Element gespeichert ist.

10. Computer (OS) mit einem zu trainierenden neuronalen Netzwerk (RN) zur Erkennung der Grenzen einer Fahrspur, auf der ein zumindest teilautomatisiert fahrendes Fahrzeug fährt, **dadurch gekennzeichnet, dass** er weiterhin eine Trainingseinrichtung (DE) umfasst) nach Anspruch 9, gekoppelt mit dem neuronalen Netzwerk (RN).

## Claims

1. Method for training a neural network (RN) intended to detect the boundaries of a traffic lane on which a vehicle with at least partially automated driving is traveling, **characterized in that** it comprises:
- a first step (10-20) in which a processor acquires first and second images respectively of first and second different portions of a traffic lane, with respectively first and second sensors installed in different orientations on a vehicle of analysis traveling on said traffic lane by simulating said vehicle, and a processor records each first image and each second image, the first sensor is called "frontal", the second sensor is called "bodywork",
- a second step (30-70) in which a processor constitutes with second successive recorded images a so-called aerial image of said traffic lane in a view from above, then a processor determines the boundaries of said traffic lane in this aerial image and elements capable of representing delimitations of said traffic lane in each first image, then a processor determines whether these determined elements correspond to these determined delimitations, and if so a processor records each element in a database (BD). determined, while in the negative a processor records in said database (BD) each determined element corresponding to the determined delimitation, and
- a third step (80) in which a processor trains said neural network (RN) with the recordings of said database (BD) so that it learns that in the presence of an element which has just been determined in a first image it must use either this element if it is not stored in correspondence of a delimitation, or the delimitation stored in correspondence of this element.

2. Method according to claim 1, **characterized in that** in said first step (10-20) we acquire first images of first successive portions of said traffic lane each located at a predefined distance in front of said analysis vehicle and seconds images of second successive portions of said traffic lane each located in the immediate vicinity of said analysis vehicle.

3. Method according to claim 2, **characterized in that** in said first step (10-20) said second images of second successive portions of said traffic lane located in the immediate vicinity of a rear part of said analysis vehicle are acquired.

4. Method according to one of claims 1 to 3, **characterized in that** in said first step (10-20) each first image and each second image are recorded in correspondence of at least one contextual information, **in that** in said second step (30-70) if the determined elements correspond to the determined boundaries, each determined element is recorded in said database (BD) in correspondence with each recorded contextual information which corresponds to it, while in the negative we record in said database (BD) each element determined in correspondence of the determined delimitation and each recorded contextual information which corresponds to it, and **in that** in said third step (80) said neural network (RN) is trained with the recordings of said database (BD) so that it learns that in the presence of at least one current contextual information and an element which has just been determined in a first image it must use either this element if it is stored in correspondence of this current contextual information, i.e. the delimitation stored in correspondence of this current contextual information and this element.

5. Method according to claim 4, **characterized in that** in said first step (10-20) we use at least one contextual information chosen from meteorological information relating to a current environment of said analysis vehicle, light information representative of 'external brightness in front of said analysis vehicle, masking information by a material received by waves in said analysis vehicle, activation of the exterior lighting system of said analysis vehicle, and an angular position of the sun relative to a horizon line located in front of said analysis vehicle.

6. Method according to claim 5, **characterized in that** in said first step (10-20) said meteorological information is received by waves in said analysis vehicle or provided by a detector equipping said analysis vehicle.

7. Method according to claim 5 or 6, **characterized in that** in said first step (10-20) said angular position of the sun is determined in said acquired image or as a function of a current schedule and a geographic position in course of said analysis vehicle.

8. Computer program product comprising a set of instructions which, when executed by processing means, is capable of implementing the training method according to one of the preceding claims to train a neural network (RN) intended to detect the boundaries of a traffic lane on which a vehicle with at least partially automated driving is traveling.

9. Training device (DE) for training a neural network (RN) intended to detect the boundaries of a traffic lane on which a vehicle with at least partially automated driving is traveling, **characterized in that** it comprises at least a processor (PR) and at least one memory (MD) arranged to perform the operations consisting of:
- obtain first and second images respectively of first and second different portions of a traffic lane, acquired with respectively first and second sensors installed in different orientations on an analysis vehicle traveling on said traffic lane by simulating said vehicle , then
- constitute with successive second recorded images a so-called aerial image of said traffic lane in a view from above, then
- determine the boundaries of said traffic lane in this aerial image and elements likely to represent the boundaries of said traffic lane in each first image, then
- determine whether these determined elements extend these determined delimitations, and if so, record in a database (BD) each determined element, or if not, record in said database (BD) each determined element corresponding to the delimitation determined, and
- train said neural network (RN) with the records of said database (BD) so that it learns that in the presence of an element which has just been determined in a first image it must use either this element it is not stored in correspondence of a delimitation, i.e. the delimitation stored in correspondence of this element.

10. Computer (OS) comprising a neural network (RN) to be trained and intended to detect the boundaries of a traffic lane on which a vehicle with at least partially automated driving is traveling, **characterized in that** it further comprises a training device (DE) according to claim 9, coupled to said neural network (RN).
